# EUROPEAN PATENT APPLICATION

(11) **EP 2 088 703 A2**
(43) Date of publication of application: **12.08.2009**
(21) Application number: 09150093.4
(22) Date of filing: 06.01.2009
(51) Int. Cl.: H04J 14/02

(54) **Optical communication apparatus and optical LAN system**

(30) Priority: 05.02.2008 JP 2008025167
(71) Applicant: Tecdia Co., Ltd., Tokyo 170-6020 (JP)
(72) Inventor: Koyama, Etsuo, Toshima-ku Tokyo 170-6020 (JP); Nagai, Yasuo, Toshima-ku Tokyo 170-6020 (JP)
(74) Representative: Brötz, Helmut

(57) **Abstract**

The objective of the present invention is to provide with an optical communication apparatus and optical LAN system capable of either avoiding or reducing the adjustment difficulty during the busy traffic while suppressing the system enlargement. The optical LAN system 100 comprises optical communication apparatuses (hereinafter, referred to as "node.") 1a∼1x, an optical multiplexing- branching means 2, and a plurality of pairs of optical fibers 3a∼3x. Each node 1a∼1x is capable of communicating with all of the other nodes 1b∼1x, 1a through first wavelength and also communicating among all nodes composing a certain group through one or more second wavelengths, blocking signal from its own. The optical multiplexing- branching means 2 multiplexes optical signals emanated from each node 1a∼1x and then branches it to all the nodes 1a∼1x. Each pair consists of a fiber 3at∼3xt for transmission and that for reception 3ar∼3xr; and the paired fibers communicatively connect each node with the optical multiplexing- branching means.

## Description

### BACKGROUND OF THE INVENTION

### Technical Field

The present invention relates to an optical communication apparatus and optical LAN system allowing the communication using multiple wavelengths and applicable to a LAN (Local Area Network) for vehicle use, SOHO (Small Office Home Office) use, a building security management system use and so on.

### Description of Related Art

Nowadays, digital apparatuses are being so widely installed in cars that it is rare to find a car without such digital apparatus. Further, technologies are spreading for the use of managing these digital apparatuses as a whole or controlling them to cooperate with the others. Correspondingly, vehicle LANs are being provided to cars equipped with such digital apparatuses.

Here, a coaxial cable, a pair cable, and so on is generally adopted as a transmission medium, for simply configured LAN use. Regarding unusual circumstance use, tendency like this seems to be stronger, that is, "electrical" transmission mediums such as pair cables are likely to be used in the vehicle LAN. Further, one way communication is generally adopted thereby realizing simple configuration regarding, for example, connection between nodes using such a transmission medium. Improvement of the communication efficiency and reliability are achieved by employing following limited communication protocols.

For example, MOST (Media Oriented Systems Transport) protocol is known for the AVs (Audio-Visual) in a car (refer, for example, to a non-patent document 1.). Further, regarding the control of cars, following protocols are known: for example, LIN (Local Interconnect Network) protocol for the control of relatively slowly moving car body parts, Flex-Ray protocol for the control of the steering system, and CAN (Controller Area Network) protocol for the control of the powertrain.

In the one way communication scheme, adjustment of communications is necessary between nodes. However, this adjustment becomes so complicate in a busy traffic that the sharp decrease occurs in the communication efficiency similar to the case of the internet. Although such defect may be measured regarding the CAN protocol for the vehicle LAN, it has a certain limit caused by the advance of digitalization of today or the increase of the traffic accompanied by it.

Therefore, the other communication is combined that conforms to protocol(s) for higher communication speed, such as the aforementioned Flex-Ray protocol. As a result, it achieves increase of the communication capacity, the compatibility with the different version, and so on, in the mean while making the LAN system very complicated. Further, discussions on conversion of the vehicle LAN into optical one have also been carried out from the point of view of noise reduction, size reduction, etc.

### [Non-patent document 1] <URL: http://en.wikipedia.org/wiki/MOST>

### SUMMARY OF THE INVENTION

However, regarding the optical LAN simply converted from the conventional electronic one, there are problems that complication and/ or enlargement of the system are not avoidable so as to get rid of the complicated reconciliation, difficulty of the reconciliations and so on. Many other problems accompany with the problems caused by rapid complication and/ or enlargement of the system for avoiding the complicated reconciliation: for example, increase in facility costs, maintenance costs, burden for the education and training, and so on.

Considering the aforementioned state of art, the objective of the present invention is to provide with an optical communication apparatus and optical LAN system capable of either avoiding or reducing the adjustment difficulty during the busy traffic while suppressing the system enlargement.

The present invention provides following configurations in order to achieve the aforementioned objective
(1) The invention of claim 1 provides with an optical communication apparatus connected with a network capable of optical communication through a plurality of wavelengths, said apparatus comprising: an optical transmitter capable of selectively allocating one or more wavelengths and transmitting the optical signal(s) with the allocated wavelength; and an optical receiver capable of receiving the optical signal over the network; wherein the optical receiver includes a plurality of optical detectors, each capable of detecting the optical signal and transforming it to electric signal and then outputting the electric signal; a plurality of optical filters, each positioned on the optical path along which the optical signal enters, the optical filter capable of picking up an allocated wavelength from the other and then outputting optical signal with the picked up wavelength; a filter controller capable of allocating the individual wavelength to the corresponding optical filter; and a received signal processor capable of transferring the output electric signal(s) to received data regarding the signal from the other nodes and blocking the output electric signal without transferring to the received data regarding the signal from its own node, if necessary; and wherein said received signal processor transfers the electric signals obtained from the optical signals that have a first wavelength and emanate from all the other nodes, as well as those obtained from the optical signals that have one or more second wavelengths and emanate from all the node(s) composing an optical communication group, except for its own node.

(2) The invention of claim 2 provides with the optical communication apparatus as claimed in claim 1, wherein each second wavelength differs from node to node.

(3) The invention of claim 3 provides with the optical communication apparatus as claimed in claim 1 or claim 2, wherein each optical filter consists of a reflection filter capable of being selectively allocated with a reflection wavelength as the picked up wavelength.

(4) The invention of claim 4 provides with the optical communication apparatus as claimed in any of preceding claim, wherein the number of optical filters is two.

(5) The invention of claim 5 provides with an optical LAN system comprising: a plurality of nodes, each consisting of the optical communication apparatus of claim 1; and an optical multiplexing- branching means connected with each node through a pair of optical transmission mediums for transmission and reception respectively and consisting of a passive device which is capable of multiplexing all optical signals emanating from the respective nodes over the medium for transmission and branching the multiplexed signal into the respective nodes over the medium for receiving.

(6) The invention of claim 6 provides with the optical LAN system as claimed in claim 5, wherein a router is connected as one of the nodes to the optical multiplexing- branching means; said router allows the communication with the other network.

According to the invention of claim 1, it is possible to provide with an optical communication apparatus capable of either avoiding or reducing the adjustment difficulty during the busy traffic while suppressing the system enlargement. This is supported by the optical communication apparatus connected with a network capable of optical communication through a plurality of wavelengths and comprising an optical transmitter and an optical receiver which are configured as follows. Here, the optical transmitter is capable of selectively allocating one or more wavelengths and transmitting the optical signal(s) with the allocated wavelength. The optical receiver is capable of receiving the optical signal over the network and includes a plurality of optical detectors, a plurality of optical filters, a filter controller, and a received signal processor. Each optical detector is capable of detecting the optical signal and transforming it to electric signal and then outputting the electric signal. Each optical filter is positioned on the optical path along which the optical signal enters, and capable of picking up an allocated wavelength from the other and then outputting optical signal with the picked up wavelength. The filter controller is capable of allocating the individual wavelength to the corresponding optical filter. The received signal processor is capable of transferring the output electric signal(s) to received data regarding the signal from the other nodes and blocking the output electric signal without transferring to the received data regarding the signal from its own node, if necessary. Further the received signal processor transfers the electric signals obtained from the optical signals that have a first wavelength and emanate from all the other nodes. The received signal processor also transfers those obtained from the optical signals that have one or more second wavelengths and emanate from all the node(s) composing an optical communication group, except for its own node.

According to the invention of claim 2, in addition to the aforementioned advantage of claim 1, it is possible to simplify communication procedure, since each second wavelength differs from node to node.

According to the invention of claim 3, in addition to the aforementioned advantage of claim 1 or claim 2, it is possible to simplify the configuration of the optical communication apparatus. This is supported by the fact that each optical filter consists of a reflection filter capable of being selectively allocated with a reflection wavelength as the picked up wavelength.

According to the invention of claim 4, in addition to the aforementioned advantage of any of preceding claim, it is possible to simplify communication procedure, since the number of optical filters is two.

According to the invention of claim 5, it is possible to provide with an optical LAN system capable of either avoiding or reducing the adjustment difficultly during the busy traffic while suppressing the system enlargement. This is supported by the optical LAN system comprising a plurality of nodes and an optical multiplexing- branching means; and each node consisting of the optical communication apparatus of claim 1. Here, the optical multiplexing- branching means is connected with each node through a pair of optical transmission mediums for transmission and reception respectively. The optical multiplexing- branching means consists of a passive device capable of multiplexing all optical signals emanating from the respective nodes over the medium for transmission and branching the multiplexed signal into the respective nodes over the medium for receiving.

According to the invention of claim 6, in addition to the aforementioned advantage of claim 5, it is possible to further suppress the enlargement of the system, since a router is connected as one of the nodes to the optical multiplexing- branching means; said router allows the communication with the other network.

### BRIEF DESCRIPTION OF THE DRAWINGS

FIG. 1 is a block diagram schematically illustrating an exemplary configuration of an optical LAN system according to the present invention.
FIG. 2 is a view conceptually illustrating the configuration of the communication function of the optical LAN system.
FIG. 3 is a block diagram showing an exemplary configuration of the optical transmitter according to the present invention.
FIG. 4 is a view illustrating block diagrams of the optical receiver: (a) illustrates a general configuration with a plurality of reflection filter, and (b) illustrates a simple configuration with a single reflection filter.
FIG. 5 is a view schematically illustrating an exemplary allocation of reflection wavelengths to a plurality of reflection filters on the optical path.
FIG. 6 is a view for explaining the processes such as the transition to the private mode in this configuration, particularly regarding the communication wavelength.
FIG. 7 is a flowchart illustrating the transition/ return process to/ from the P-mode in the optical LAN system with configuration illustrated in FIGS. 1∼4 (a); the process is executed in advance/ after the event that the A-node communicate with the B-node in the P-mode.
FIG. 8 is a flowchart corresponding to the FIG. 7 and illustrating the operations of all the nodes except for the A-node; the operation is performed when an event has happened that the A-node communicates with the B-mode.
FIG. 9 is a flowchart illustrating the operation of the A-node integrating a C-node during the P-mode communication with the B-node, the operation regarding the transit and the return to/ from the integrated P-mode communication with the C-mode.
FIG. 10 is a view illustrating, from the point of view of communication wavelength, an exemplary configuration that allows the optical transmitter of the node to simultaneously communicate using a plurality of the PM-communication wavelengths.
FIG. 11 is a view illustrating, from the point of view of communication wavelength, an exemplary configuration that allows the node with s single reflection filter as shown in FIG. 4 (b) to communicate.
FIG. 12 is a view illustrating an exemplary configuration for integrating a new LAN to the basic LAN.
FIG. 13 is a block diagram schematically illustrating an embodiment, in which a new LAN is integrated by way of a router composing one of the nodes of the optical LAN system.
FIG. 14 is a view illustrating an exemplary allocation of wavelength bands for the communication performable in the configuration shown in FIG. 12, all the LANs to be integrated comprising the optical LANs.

### DETAILED DESCRIPTION OF THE PREFERRED EMBODIMENTS

Hereinafter, referring to the accompanying drawings illustrating exemplary configurations, descriptions are made on embodiments according to the present invention.

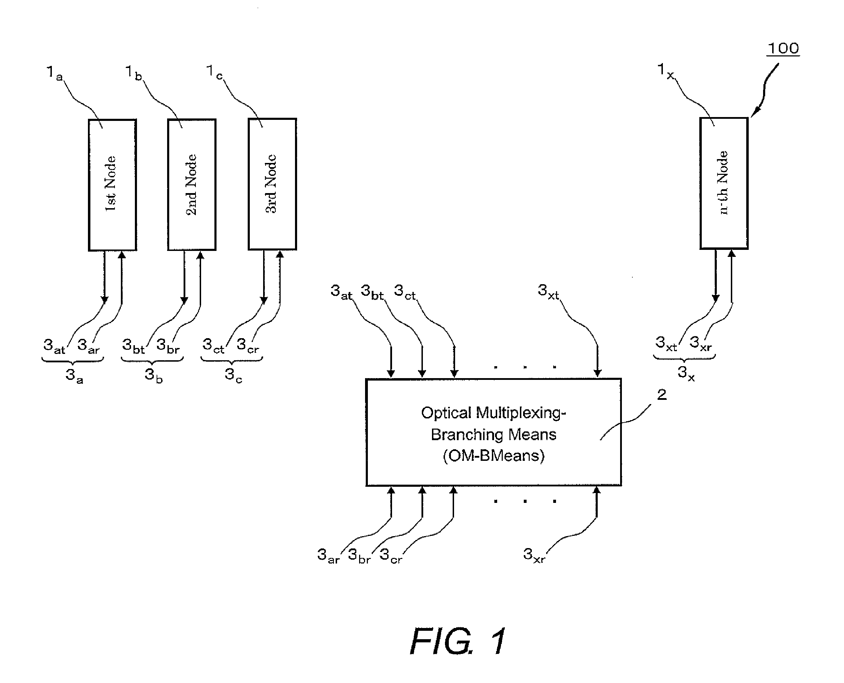

FIG. 1 is a block diagram schematically illustrating an exemplary configuration of an optical LAN system according to the present invention. The optical LAN system 100 comprises optical communication apparatuses (hereinafter, referred to as "node.") 1a∼1x, an optical multiplexing- branching means 2, and optical fibers 3a∼3x. Hereat, each node 1a∼1x consists of a computer with an optical communication function; and the optical multiplexing-branching means 2 multiplexes optical signals emanating from the respective nodes 1a∼1x and then branches the multiplexed signal to each node 1a∼1x. The optical fibers 3a∼3x are made from resign, inorganic material, etc. and connect respective nodes 1a∼1x with the optical multiplexing- branching means 2.

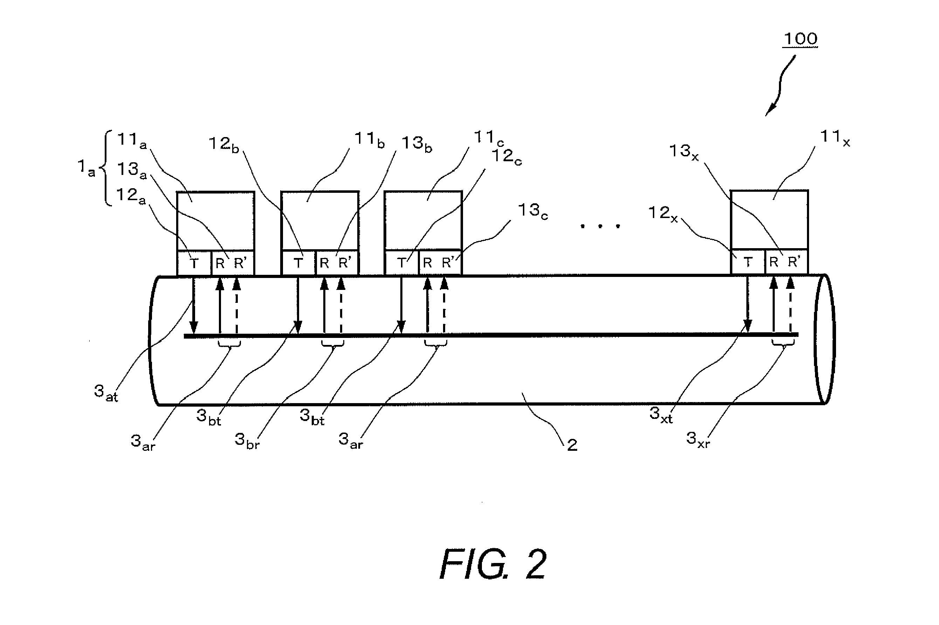

FIG. 2 is a view conceptually illustrating the configuration of the communication function of the optical LAN system. The node 1a∼1x has, as shown in FIG. 2, a control processing unit 11a∼11x (hereinafter, may simply be abbreviated as 11.), an optical transmitter 12a∼12x (hereinafter, may simply be abbreviated as 12.), and an optical receiver 13a∼13x (hereinafter, may simply be abbreviated as 13.). Here, the control processing unit 11 consists of a computer, a CPU (Central Processing Unit), and the like. The optical transmitter 12 is capable of transmitting optical signal with a wavelength specific to the corresponding node over the optical fiber 3at∼3xt. The optical receiver 13 is capable of receiving the optical signal from the optical multiplexing- branching means 2 over the optical fiber 3ar∼3xr.

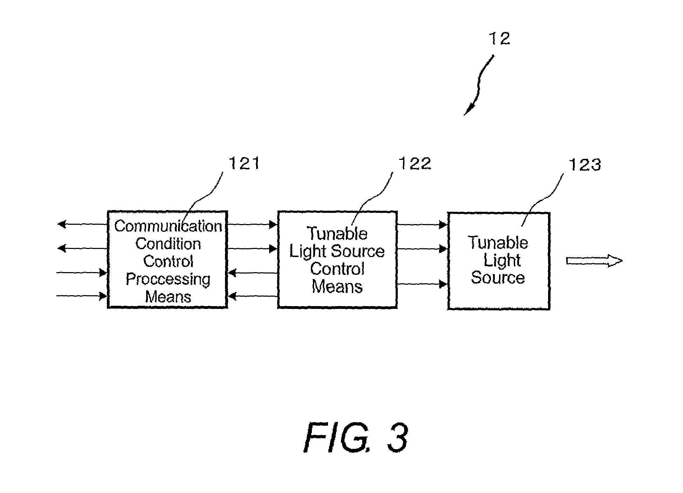

FIG. 3 is a block diagram showing an exemplary configuration of the optical transmitter according to the present invention. The optical transmitter 12 has, as shown in FIG. 3, a communication condition control processing means 121, a tunable light source control means 122, and a tunable light source 123. The communication condition control processing means 121 is connected with the control processing unit 11 and controls the communication condition such as communication band, communication protocol, transmission wavelength on the basis of the input command, data, etc. The tunable light source control means 122 drives and controls the tunable light source 123 responsive to the output from the communication condition control processing means 121. The tunable light source 123 is capable of emitting optical signal in responsive to the output from the tunable light source control means 122.

Here, the communication condition control processing means 121 performs, depending on the transmission command from the control processing unit 11, destination, data size, transmission status, and so on, selection of a communication protocol and allocation of transmission wavelength (hereinafter, referred to as "node transmission wavelength."). Besides, the communication condition control processing means 121 reconfigures the transmission data to make sender data depending on the selected communication protocol. The means 121 further outputs the sender data and wavelength specifying data for specifying the node transmission wavelength.

The tunable light source control means 122 specifies the node transmission wavelength on the basis of the wavelength specifying data output from the communication condition control processing means 121. The means 122 also drives and controls the tunable light source 123 so as to transmit the sender data through optical signal. Regarding the control and the drive method of the light source about the wavelength, the power, etc., their descriptions are omitted because of being well-known.

The tunable light source 123 has for example a semiconductor laser with an external resonator and is capable of selectively switching the node transmission wavelength in responsive to the control by the tunable light source control means 122. The tunable light source 123 may also have a temperature sensor and a cooling device such as TEC (Thermo-Electric Cooler), thereby being controlled by the tunable light source control means 122.

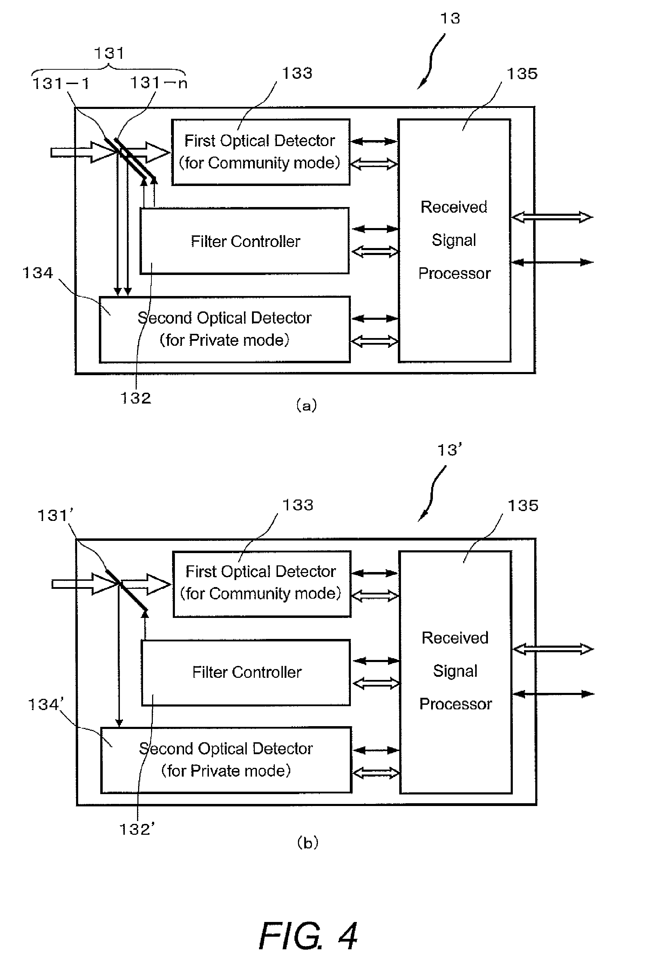

FIG. 4 is a view illustrating block diagrams of the optical receiver: (a) illustrates a general configuration with a plurality of reflection filter, and (b) illustrates a simple configuration with a single reflection filter. The optical receiver 13 has, as shown in FIG. 4(a), a plurality of reflection filters 131-1∼131-n, a filter controller 132, a first optical detector 133, a second optical detector 134, and a received signal processor 135. Here, the filter 131-1∼131-n is capable of reflecting the optical signal with an allocated wavelength from the entered optical signals over the optical fibers 3ar∼3xr. The filter controller 132 is capable of allocating and controlling each wavelength of the reflection filter 131-1∼131-n. The first optical detector 133 is capable of detecting the optical signal transmitting the reflection filter 131-1∼131-n; and the second optical detector 134 is capable of detecting the optical signals reflected by respective optical filters 131-1∼131-n. The received signal processor 135 is capable of transferring the outputs from the optical detectors 133, 134 to the received data.

Here, the reflection filter 131-1∼131-n is an embodiment of a beam splitter which is capable of splitting the optical signal entered along the optical path; and each branching wavelength corresponds to reflection wavelength. Correspondingly, the filter controller 132 capable of allocating respective reflection wavelengths is an embodiment of branch control means capable of allocating respective branching wavelengths. Hereinafter, descriptions will be performed by considering the branching means as the reflection filters 131-1∼131-n and the branching wavelength as the reflection wavelength. As the reflection filter 131-1∼131-n, for example, "Tunable wavelength liquid crystal filter" is available, obtainable from TECDIA co. and capable of selectively tuning the reflection wavelength. Further, regarding the optical LAN system for narrowband communication use, it is also possible that the optical receiver 13 being simply configured as shown in FIG. 4(b).

Here, in the configuration that different communication protocols can coexist, the received signal processor 135 may have configuration capable of transferring the output from the first and second optical detector 133, 134 in parallel or by switching protocols alternately. In detail, the output of the first detector 133 may conform to the first protocol and that of the second detector 134 to the second protocol; and each output may be processed in parallel or by switching protocols alternately. However, the received signal processor 135 works, in a certain case, independent from the output from the second optical detector 134.

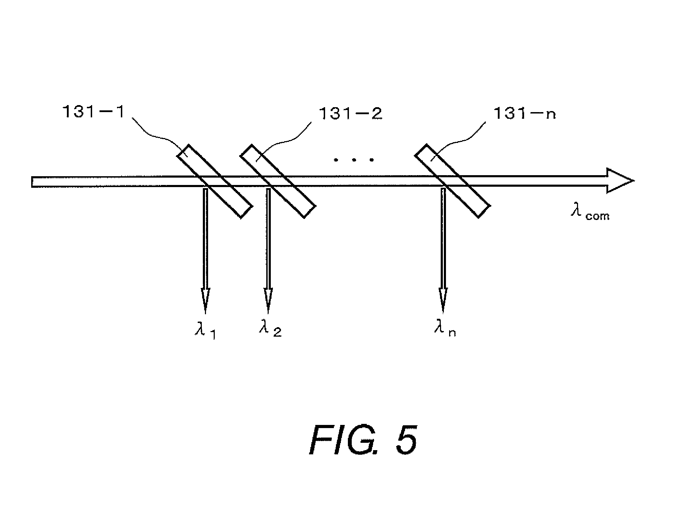

FIG. 5 is a view schematically illustrating an exemplary allocation of reflection wavelengths to a plurality of reflection filters on the optical path. As a consequence of allocation that each reflection filter is allocated with a different reflection wavelength as shown in FIG. 5, individual wavelengths of λ com, λ1, λ2, ..., and λn are available for the communication. Here, λcom is allocated to the optical signal entering the first optical detector 133, and λ1 to the optical signal reflected by the reflection filter 131-1 and then entering the second optical detector 134. Similarly, each λ2, ..., λn is allocated to the optical signal reflected by the reflection filter 131-2, ..., the reflection filter 131-n, respectively, thereby entering the second optical detector 134.

The multiplexing- branching means 2 has configuration, for example, that optical signals entered through respective optical fibers 3at∼3xt are diffused within it, then multiplexed, and then branched into the respective optical fibers 3ar∼3xr. In detail, the optical multiplexing- branching means 2 is provided as such a simple member which is obtained, for example, by bundling optical fibers 3a∼3x thereby fusing the bundled portion so as to be capable of multiplexing and branching. Further the multiplexing- branching means 2 may have simple configuration of such as slab wave guide. Therefore, the optical multiplexing- branching means 2 does not include a complicate element, for example, active device such as a semiconductor device, switching device for switching the optical path, and the like. Each node 1a∼1x has a configuration capable of choosing whether to receive or not the optical signal from its own node 1a∼1x.

Hereinafter, descriptions will be performed on the operation of the optical LAN system of the present invention with reference to the configuration shown in FIGS.1∼4(a). In advance, descriptions will be given on the community mode and the private mode, as the communication mode among nodes. Here, the community mode is mode in which transmission of information to the entire nodes is allowed; and the private mode is mode in which communication is allowed between/ among nodes forming a certain group.

For the convenience of understanding, technical terms to be referred below are defined. First, the community mode is abbreviated as C-mode; in this mode, the communication is referred to as C-mode communication, the allocated wavelength as a CM-communication wavelength, and the communication channel as a CM-channel. Similarly, the private mode is abbreviated as P-mode; in this mode, the communication is referred to as P-mode communication, the allocated wavelength as a PM-communication wavelength, and the communication channel as a PM-channel. Further, a node starting the P-mode communication or integrating the other into this communication is referred as a PM-sender node; and one ore more destiny nodes are referred to as PM destination nodes. Further, the PM-sender nodes and the PM-destination nodes form a P-mode communication group.

First, descriptions will be performed on the C-mode in detail. In the C-mode, average communication band per one node is relatively narrow, therefore reconciliation among the nodes, communication of small size data, and so on are allowed. Here the reconciliation may be performed at the boot-up step of the LAN, the transition step to the P-mode, and the return step from the P-mode and the like, In the C-mode, optical signal emanating from any one of the nodes passes through the reflection filters 131-n∼131-n, enters to the first optical detector 133 and then is detected. The C-mode communication is performed using the aforementioned CM-communication wavelength, the communication band, the predefined communication protocol and such conditions. This communication is achievable after the reconciliation among the respective nodes at boot-up step. Further, in order to conform to other communication protocol such as CAN, each node may have configuration capable of receiving the signal from its own node in the C-mode or being switched whether to receive or not this signal. Regarding the detail of the C-mode communication, descriptions are omitted because it is similar to that of the one way communication on a general optical LAN.

Here, the reconciliation at the transition step from C-mode to P-mode, notification (hereinafter, referred to as "P-mode communication start notification.") is performed in the C-mode from the PM-sender node to all the other nodes. The notification notifies the start of the P-mode communication, the PM-communication wavelength, the communication band, the communication protocol, one or more PM-destination nodes, etc. Here, in the configuration that the PM-communication wavelength is fixed to the individual wavelength specific to each node, the PM communication wavelength may be omitted from the P-mode communication start notification by storing the PM-communication wavelengths of all nodes to each node. Further, although a plurality of P-mode communication group may exist at a time, descriptions are concentrated on one P-mode communication group for the purpose of understanding.

Besides, in the reconciliation at the return step from the P-mode to the C-mode, notification (hereinafter, referred to as "P-mode communication completion notification.") is performed, for example from the PM-sender node to all the other nodes. This notification notifies the completion of the P-mode communication, the PM-communication wavelength, the communication band, the communication protocol, PM-destination nodes, etc. Here, in the configuration that the PM-communication wavelength is fixed to the individual wavelength specific to each node, the PM communication wavelength may be omitted from the P-mode communication completion notification, similarly to the start notification, by storing the PM-communication wavelengths of all nodes to each node.

Next, descriptions will be performed on the P-mode. In the C-mode, the reconciliation, small-size data communication and so on is permissible. However, there often happens that large-size data communication is necessary between certain nodes such as researcher's terminals and their server. Further, there may be nodes with temporary heavy traffic as well as continuously heavy one; for example, terminals in the management section, sales section, and the like may have temporary heavy traffic for storing data to the outer server at the end of the day. Obstructions may be caused to the usual business of the staff himself or the other sections even by such temporal unbalance of the communication, for example by trying to send a large size file.

This is the P-mode, in which between certain nodes data communication is allowed through the communication channel different from the CM-channel, thereby avoiding the hindrance. The transition from the C-mode to the P-mode begins with the aforementioned P-mode communication start notification performed in the C-mode; in this transition step, each node responds by setting as follows.

First, descriptions will be performed on the one way communication that uses single PM-communication wavelength. In this communication, all the nodes except for the PM-sender node allocate in responsive to the P-mode communication start notification the notified reflection wavelength to a certain reflection filter of its own filters 131-1∼131-n. Similarly, the PM-sender node also allocates the having notified reflection wavelength to a certain reflection filter of its own filters 131-1∼131-n. (0391) The communication protocol is chosen from that allows to receive the optical signal from all the other nodes, by the mutual reconciliations among the respective nodes. Each node of the P-mode communication group blocks so as not to receive its own optical signal, i.e. that from its own node. Hereinafter, to block the optical signal without receiving is simply referred to as "the block" or "to block". (0392) All the other nodes except for those of the P-mode communication group block the optical signal with this PM-communication wavelength. All the other nodes return acknowledge signal (hereinafter, referred to as "OK acknowledge.") notifying completion of the aforementioned provision to the PM-sender node, after the completion of this provision.

Next, descriptions will be performed on the bi-directional communication that uses a plurality of the PM-communication wavelengths. In this configuration, for example, each PM-destination node first notifies in responsive to the P-mode communication start notification the PM-communication wavelength allocated to its own node. Here, this PM-communication wavelength is determined by the reconciliation, referred to as "second PM-communication wavelength", and different from "first PM-communication wavelength" specific to the PM-sender node (A-node). The second PM-communication wavelengths are to be used corresponding to the PM-destination nodes (B-nodes); and the PM-sender node stores all these PM-communication wavelengths. However, some processes may be omitted in the configuration that each node is allowed to send the optical signal using the CM-communication wavelength and the PM communication wavelength specific to its own node. For example, the notification to the other nodes and the reconciliations for determining the wavelengths among the B-nodes in the C-mode can be omitted; and the omission is achievable by storing these wavelengths to each node. Hereinafter, descriptions will be given by taking an example that each node has the later configuration capable of omitting the aforementioned reconciliations among the B-nodes and notifying PM-communication wavelengths so as to contribute high speed communication.

Next, all the nodes allocate "the notified/ having notified PM-communication wavelength" as the reflection wavelength of their own reflection filter 131-1∼131-n. Then each node of the P-mode communication group switches itself so as to receive the optical signals from the other nodes in the P-mode and block the optical signal from itself. All the nodes except for those of the P-mode communication group block the optical signals with these PM-communication wavelength. Each B-node returns the OK acknowledge notifying the completion of the corresponding process to the PM-sender node after the completion of the aforementioned processes.

The aforementioned processes performed in responsive to the P-mode communication start notification by B-nodes is hereinafter referred to as "destination node bi-directional P-mode transition process". Therefore, this transition process is performed by each node of the P-mode communication group except for the PM-sender node so as to allow the bi-directional communication in the P-mode. Further, aforementioned processes performed by the PM-sender node after sending the P-mode communication start notification is referred to as "sender node bi-directional P-mode transition process". This latter transition process includes the aforementioned allocation of the reflection wavelength, storage of the PM-communication wavelength (if not specific to the node), and so on. The processes performed by all the nodes except for those of the P-mode communication group are referred to as "other nodes bi-directional P-mode transition process". Thus the other nodes bi-directional P-mode transition process is performed in responsive to the P-mode communication start notification and includes the aforementioned "block".

Next, in the reconciliation of returning from P-mode to C-mode, notification (hereinafter, referred to as "P-mode communication completion notification.") is performed over the CM-communication wavelength. This finish notification notifies, for example, finish of the P-mode communication, all the related PM-communication wavelengths, the communication band, the communication protocol, the PM-destination nodes, and so on. Each node except for the PM-sender node resets in responsive to the P-mode communication completion notification the reflection wavelength allocated to its corresponding reflection filters 131-1∼131-n. Then, the PM-sender node also resets the reflection wavelength allocated to its corresponding reflection filters 131-1∼131-n. Next, each node of the P-mode communication group reinstates its transmission wavelength to the CM-communication wavelength. Then, each node except for the PM-sender node transmits the "OK acknowledge" to the PM-sender node after restoring the C-mode, thereby entire recovery to the C-mode is completed.

In the P-mode, as described above, the optical signal emanating from any node of the P-mode communication group is reflected by the reflection filter 131-1∼131-n allocated the reflection wavelength in the C-mode, then enters to the second optical detector 134 and thereby is detected. However, each member of the P-mode communication group operates, here, so as to receive the optical signal from the other nodes, while blocking the one form its own node. Hereat, as the PM-communication wavelength, the communication band, the communication protocol, the PM-destination node and so on, each node of the of the P-mode communication group allocates to itself those determined as described above in the C-mode. However, flexible allocation is possible, since being permissible to be different regarding the PM-communication wavelength, the communication band, the communication protocol, and so on. Here, regarding the detail of the communication in the P-mode, descriptions are omitted due to the similarity to the one-way communication or the bi-directional communication in the usual optical LAN.

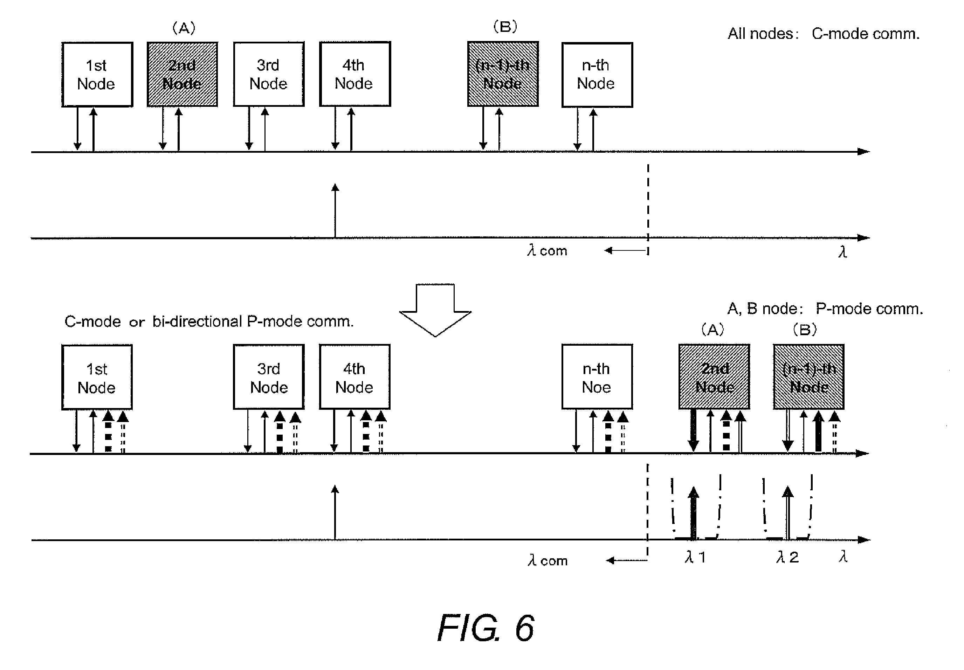

Hereinafter, descriptions will be given in detail on the processes such as transition to the private mode in which the bi-directional communication is allowed, with reference to the optical LAN system whose configuration is shown in FIGS. 1∼4(a). FIG. 6 is a view for explaining the processes such as the transition to the private mode in this configuration, particularly regarding the communication wavelength. In FIG. 6, there is illustrated an example that the aforementioned PM-sender node is a "second node" and the PM-destination node is a "(n-1)-th node". Here, the PM-sender node is also the A-node, and the PM-destination node is also the B-node. Here, the PM-destination node is not limited to one node; the referred B-node(s) are intended to mean one or more nodes unless being particularly limited to one node.

As shown in FIG. 6, in this configuration, the C-mode communication is performed as one-way communication using the common CM-communication wavelength (λ com); and the P-mode communication is carried out as the bi-directional communication among the P-mode communication group members using the PM-communication wavelengths (λ 1, λ2), each of which is specific to its node. In FIG. 6, there are shown states of nodes in the C-mode communication (the upper part of FIG. 6) by means of arrows. The arrow pointing downwards at the left of the node (hereinafter, referred to as "C-sending arrow.") shows the state that the corresponding node is capable of sending signal with the CM-communication wavelength. On the other hand, the inverted C-sending arrow (hereinafter, referred to as "C-receiving arrow.") shows the state that the corresponding node is capable of receiving signal with the CM-communication wavelength.

Further, the bold C-sending arrow (hereinafter, referred to as "P-sending solid bold arrow.") in the lower part of FIG. 6 shows the state that the corresponding node is capable of sending signal with the first PM-communication wavelength. The arrow with two lines (hereinafter, referred to as "P-sending solid double arrow.") shows the state that the corresponding node is capable of sending signal with the second PM-communication wavelength. Furthermore, the inverted P-sending solid bold arrow (hereinafter, referred to as "P-receiving solid bold arrow.") shows the state that the corresponding node is capable of receiving signal with the first PM-communication wavelength. The inverted P-sending solid double arrow (hereinafter, referred to as "P-receiving solid double arrow.") shows the state that the corresponding node is capable of receiving signal with the second PM-communication wavelength. Besides, the broken P-receiving solid bold arrow (hereinafter, referred to as "P-sending broken bold arrow.") shows the block state that the corresponding node blocks signal with the first PM-communication wavelength. The broken P-receiving solid double arrow (hereinafter, referred to as "P-receiving broken double arrow.") shows the block state that the corresponding node blocks signal with the second PM-communication wavelength.

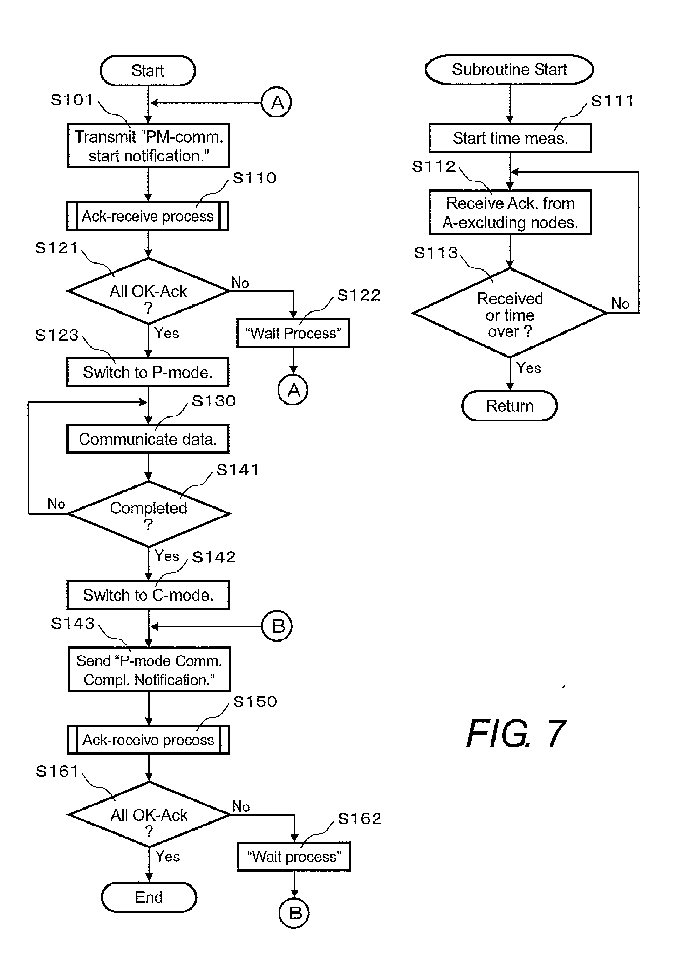

FIG. 7 is a flowchart illustrating the transition/ return process to/ from the P-mode in the optical LAN system with configuration illustrated in FIGS. 1∼4 (a); the process is executed in advance/ after the event that the A-node communicate with the B-node in the P-mode. Hereinafter, such event is referred to as "P-mode communication event."

First, the A-node sends the P-mode communication start notification to all the other nodes through the CM-channel (S101) when the P-mode communication event has happened. Hereinafter, all the nodes excluding the A-node is/ are referred to as "A-excluding node(s);" all the nodes excluding the A-node and the B-node is/ are referred to as "AB-excluding node(s)." Receiving the P-mode communication start notification sent in the step S101, the B-node executes the destination node bi-directional P-mode transition process and the AB-excluding nodes execute the other nodes bi-directional P-mode transition process. Thereafter, the OK acknowledges are usually returned from the A-excluding nodes to the A-node.

The A-node executes "acknowledge signal-receive process" for receiving the acknowledge signals from the respective A-excluding nodes (S110), when having sent the P-mode communication start notification in step S101. In the acknowledge signal-receive process, the A-node first starts to measure time (S111), next waits and receives acknowledge signals from the A-excluding nodes (S112), and then decides whether any one of the following two events has happened or not. One of these events is that all acknowledge signals has received from the A-excluding nodes, and the other one is that the time of which measurement started in the step S111 is over the certain interval (S113). When neither was decided to have been happened in step S113, returning to the step S112 the processes are repeated until any one of these events happens.

When the acknowledge signal-receive process has finished in the step 110, the A-node decides whether all the OK acknowledges have been received or not from all the A-excluding node (S121). When having decided that not all were received, the A-node executes "waiting process" in order to redo the transition to the P-mode (hereinafter, referred to as "to retry.") (S122). In the waiting process, elapse of a certain time interval is waited. Hereat, the repeat of the retry may be limited within a certain time. Hereinafter, the same is the case with the retry.

When it was decided in step 121 that the OK acknowledges were received from all the A-excluding nodes, the A-node switches the communication mode to the P-mode (S123). In this switch process, the A-node executes the aforementioned "sender node bi-directional P-mode transition process."

Next, the A-node communicates data in the P-mode under the condition notified previously (S130), decides whether the data communication has completed or not (S141). When it has decided that the process was incomplete, the process returns to the step S130 and repeats thereonafter. Hereat, the data communication in the P-mode is allowed not only between/ among the A-node and B-node(s), but between/ among the B-nodes. Further, the sent data may be accompanied by the destination address as a part of the header, similar to the case of the packet communication.

When in step S141 it has decided that the data communication with the B-node was completed, the A-node switches the communication mode to the C-mode (S142). In this process, the A-node switches the transmission wavelength from the PM-communication wavelength to the CM-communication wavelength and resets the reflection wavelengths of its corresponding reflection filters 131-1∼131-n.

Next, the A-node sends the P-mode communication completion notification to the A-excluding nodes (S143) through the CM-channel. Hereat, having received this notification sent in the step S143, the A-excluding nodes reset the reflection wavelength of its corresponding reflection filters 131-1∼ 131-n; and the B-nodes return the transmission wavelength to the CM-communication wavelength. Then, the A-excluding nodes return the OK acknowledges to the A-node when having completed the preparation in responsive to the notification of the step S143.

When having sent the P-mode communication start notification in the step S143, the A-node executes the acknowledge signal-receive process (S150), similar to the case of the step S110. When having finished the acknowledge signal-receive process in step S150, the A-node decides whether having received the OK acknowledges from all the A-excluding nodes or not (S161). When it was decided that not all the OK-acknowledge signal were received, the A-node executes the waiting process (S162); and then the process returns to the step S143 and repeats thereonafter in order to retry. When it has decided that all the OK acknowledges were received, the process is finished; thereby the return to the C-mode is completed. Hereat, regarding the retry, the same is the case with the retry mentioned above.

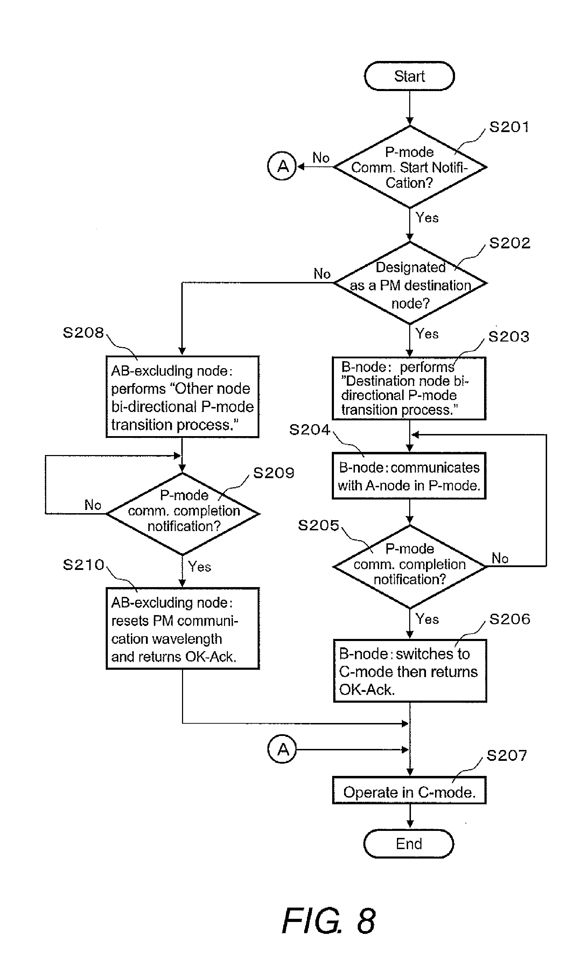

FIG. 8 is a flowchart corresponding to the FIG. 7 and illustrating the operations of all the nodes except for the A-node; the operation is performed when an event has happened that the A-node communicates with the B-mode.
Since in the C-mode each node is capable of receiving data from the other nodes, the A-excluding nodes first decide whether the received data is the P-mode communication start notification or not (S201). When having decided that it was not the start notification, the A-excluding nodes continue to operate in the C-mode (S207).

When having decided in step S201 that it was the start notification, each A-excluding node decides whether being designated in the start notification as the PM destination node or not (S202). The node which decided in the step S202 that itself is designated as the PM-destination node, namely the B-node executes the aforementioned "destination node bi-directional P-mode transition process" (S203). Then the B-node waits data from the A-node in the P-mode and communicates with the A-node (S204). Hereat, the sent data may, similar to the case of the packet communication, be accompanied by the destination address as a part of the header. Further, the communication between the B-nodes is also allowable.

Next, the B-node decides whether having received the P-mode communication completion notification or not (S205); and then the process returns to the step 204 and repeats thereonafter until receiving the completion notification, that is, the P-mode communication with the A-node is performed.

When having decided in step S205 that the P-mode communication completion notification from the A-node was received, the B-node switches the communication mode to the C-mode and then returns the OK acknowledge to the A-node (S206), thereby operates in the C-mode (S207). In this switch process, the B-node restores the transmission wavelength to the CM-communication wavelength and resets the reflection wavelength of its corresponding reflection filter(s) 131-1∼ 131-n.

Each node which having decided in the step S202 that itself was not designated as the PM-destination node in the P-mode communication start notification, that is, each AB-excluding node executes the aforementioned other nodes bi-directional P-mode transition process (S208).

Next, the AB-excluding node decides whether having received P-mode communication completion notification form the A-node (S209) and repeats this process until receiving the completion notification. When having decided in the step 209 that the completion notification from the A-node was received, the AB-excluding node resets the reflection wavelength of its corresponding reflection filter(s) 131-1∼ 131-n and then returns the OK acknowledge (S210), thereby operates in the C-mode (S207).

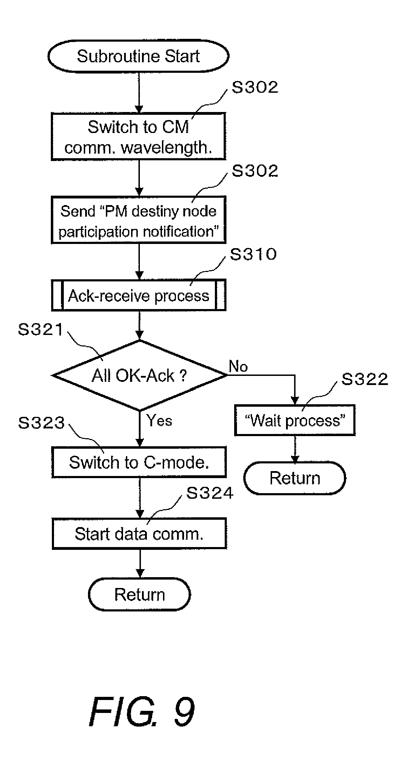

FIG. 9 is a flowchart illustrating the operation of the A-node integrating a C-node during the P-mode communication with the B-node, the operation regarding the transit and the return to/ from the integrated P-mode communication with the C-mode. Hereinafter, explanations are performed considering that the C-node operates in the C-mode.

First, since being performing the P-mode communication with the B-node, the A-node switches the transmission wavelength to the CM-communication wavelength (S301). Then the A-node sends to the A-excluding nodes the notification (hereinafter, referred to as "PM-destiny node participation notification.") that notifies the participation of the C-node in the P-mode communication, through the CM-cannel (S302). This participation notification notifies, for example, start of the integration to the P-mode communication, the PM-communication wavelengths, the communication band, the communication protocol, a node to be integrated, and so on.

Having received the PM-destiny node participation notification sent in the step S302, the C-node executes the aforementioned destination node bi-directional P-mode transition process. Although the B-node can perform on demand the transition process, explanations are performed hereinafter by considering that the B-node executes the transition process in order to ensure the capability of the P-mode communication with the C-node. The nodes other than the A-node, B-node, and C-node allocate the reflection wavelength as mentioned above so as to block the optical signal with the PM-communication wavelength from the C-node.

The A-node, when having sent the PM-destiny node participation notification in the step S302, executes the acknowledge signal-receive process (S310). When having finished the acknowledge signal-receive process, the A-node decides whether having received the OK acknowledge from all the A-excluding nodes or not (S321). When having decided not all, the A-node executes the waiting process in order to retry the transit to the P-mode (S322).

When having decided that the OK acknowledges from all the A-excluding nodes were received, the A-node switches the communication mode to the P-mode (S323) and starts the communication including the C-node in the P-mode (S324); and then the process returns to the step S130. In this switch process, the A-node executes the aforementioned "sender node bi-directional P-mode transition process", in order to allow the communication with the C-node. Further, the sent data can be accompanied by the destination address as a part of the header, similar to the case of the packet communication. Furthermore, data communication may be allowed between the B-nodes or between the B-node and the C-node.

Thus, the P-mode allows the communication among the P-mode communication group members through a dedicated channel completely independent from the CM-channel. Consequently, free communication is achievable independent from the conditions such as the communication band, the communication protocol, data size, the communication state, etc. of the other channel and/ or P-mode communication group, thereby allowing of avoiding congestion state. Hereat, when the allocation of the reflection wavelength to the reflection filters is inadequately carried out at the transition or the shift step to the P-mode, error occurs in the corresponding node because the optical signal with the PM-communication wavelength enters to the first optical detector 133. Therefore, it is possible to detect the inadequate allocation of the reflection wavelength to the reflection filter. This optical signal overlaps with that of the C-mode communication, thereby significantly peculiar state occurs.

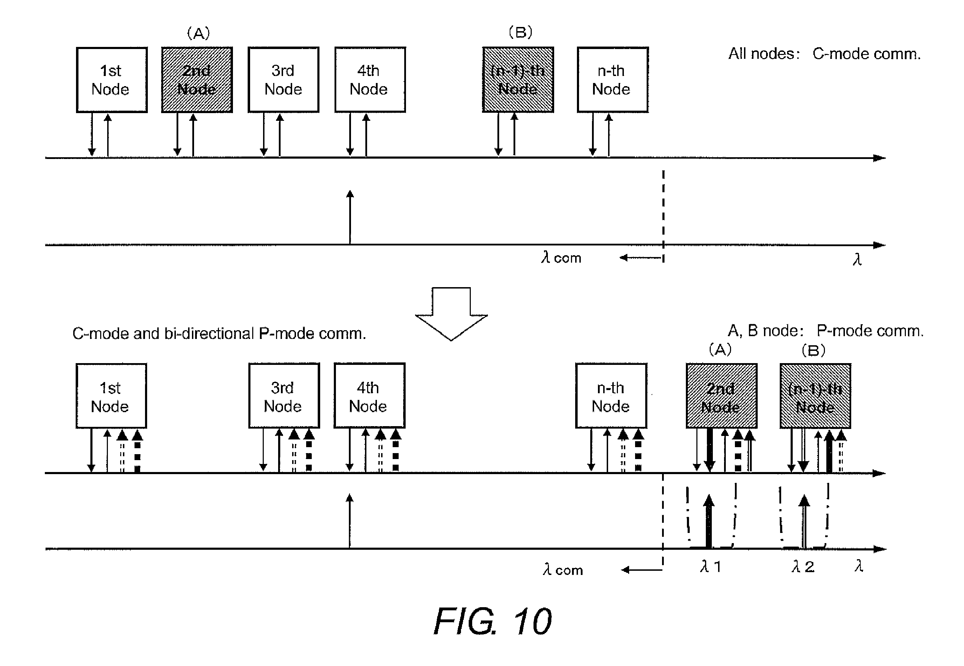

FIG. 10 is a view illustrating, from the point of view of communication wavelength, an exemplary configuration that allows the optical transmitter of the node to simultaneously communicate using a plurality of the PM-communication wavelengths. The node capable of allocating a plurality of the PM-communication wavelength allows more versatile communication, that is achievable by allocating one of the transmission wavelengths for exclusive use for the C-mode communication and the other for the P-mode communication use, as shown in FIG. 10. For example, switching of the transmission wavelength is omissible at the transition/ transit step between the modes or at the return step; beside simultaneous communication is achievable with the nodes of a plurality of the P-mode communication groups depending on the communication resource.

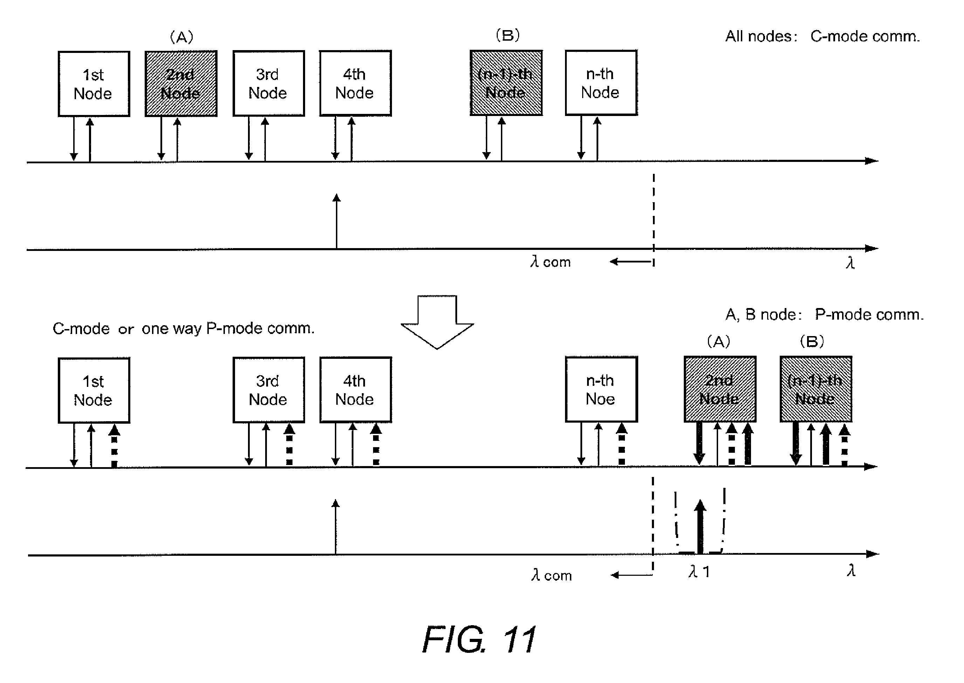

FIG. 11 is a view illustrating, from the point of view of communication wavelength, an exemplary configuration that allows the node with s single reflection filter as shown in FIG. 4 (b) to communicate. Even in a simple configuration that the optical receiver has a single reflection filter 131', the communication through a dedicated channel completely independent from the C-channel is achievable by performing the reconciliation among the P-mode communication group members, as shown in FIG. 11. Such optical LAN system having the optical receiver shown in FIG. 4 (b) is suitable to the application that the P-mode communication group comprises less nodes, large communication band is unnecessary to each mode in the P-mode, and so on.

Further the optical LAN system may, if necessary, include the node(s) with the single reflection filter and/ or that/ those with a plurality of reflection filters. Those nodes may further be classified into two groups: one is capable of transmitting using the single PM-communication wavelength, the other using a plurality of the PM-communication wavelengths.

Furthermore, the integration of the node(s) is achievable by having configured the optical LAN to have spare fiber terminal(s) in advance thereby communicatively connecting the node(s) to be integrated to available fibers, on demand. Further if more integration are necessary than those expected, the integration is also achievable by extending the LAN described below.

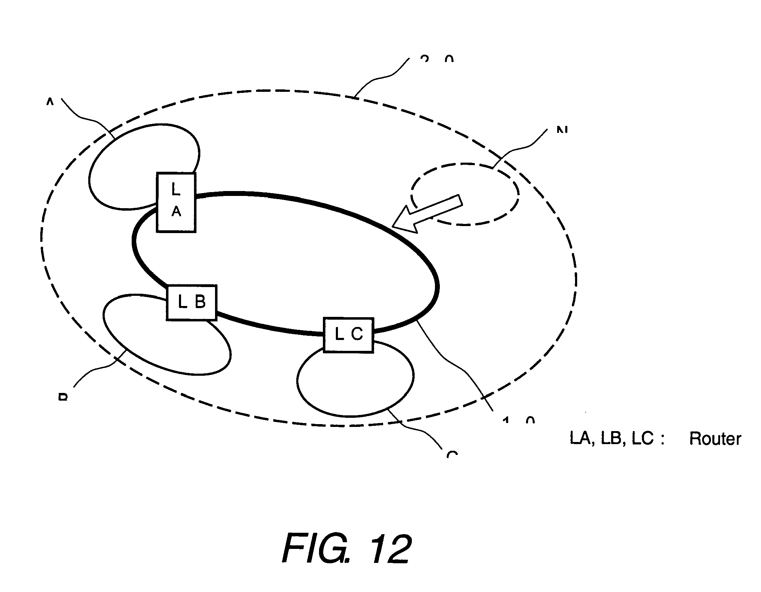

FIG. 12 is a view illustrating an exemplary configuration for integrating a new LAN to the basic LAN. In FIG. 12, prior to the integration, the optical LAN system 100 only configures the entire system. However, the integration of a new LAN is achievable by providing a router (corresponding to the gateway in the sense of software) as one of the node capable of communicating with the original LAN system 100.

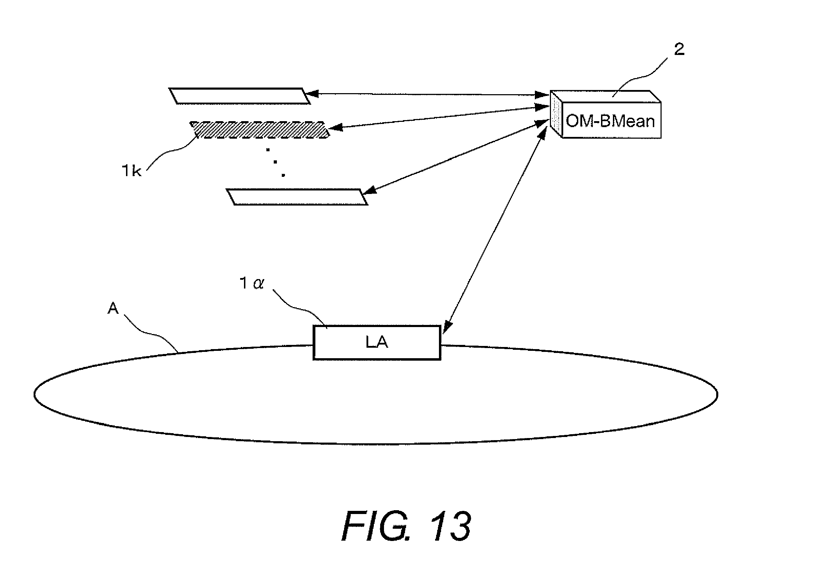

FIG. 13 is a block diagram schematically illustrating an embodiment, in which a new LAN is integrated by way of a router composing one of the nodes of the optical LAN system.
In FIG. 13, for example, the node of the LAN (A) is allowed to communicate with the destiny node 1k of the optical LAN system 100 by way of router 1 α. Hereat, in FIG. 12, LANs (A, B, C) is integrated in advance.

The LAN to be integrated is not limited to that for the optical communication, but can be that capable of the communication using the electrical signal (hereinafter, referred to as "electrical LAN."), by selecting a suitable router. For example, a router is selected from those capable of receiving both the optical signal from the optical LAN system 100 and the electrical signal from the electric LAN and also transforming between the optical signal and the electric signal.

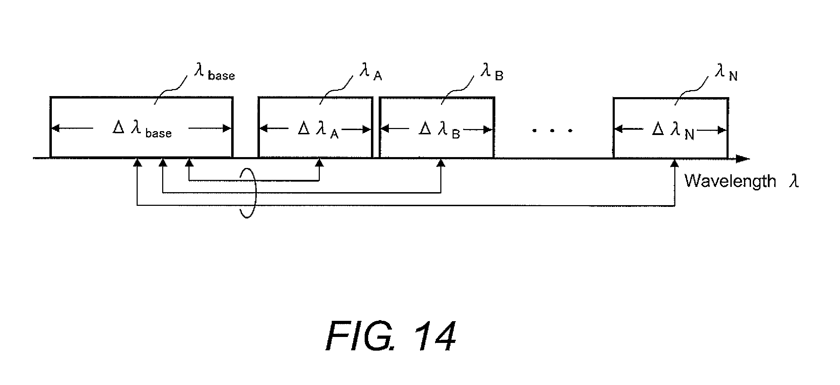

FIG. 14 is a view illustrating an exemplary allocation of wavelength bands for the communication performable in the configuration shown in FIG. 12, all the LANs to be integrated comprising the optical LANs. In FIG. 14, the optical LAN system 100 is capable of the aforementioned communication through the communication band λ base and another LANs A, B, C, ... through the communication band λ A, λ B, λ C, ..., respectively. The LAN (N), shown by the broken line in the FIG. 12, to be integrated is allocated with a new communication band λ N.

The Optical communication apparatus and optical LAN system according to the present invention are applicable to the vehicle LAN conforming the MOST, LIN, Flex-Ray, CAN, etc. as well as LANs for uses between apparatuses, between racks inside an apparatus, for SOHO use, for office use, for building security use and so on.

## Claims

1. An optical communication apparatus connected with a network capable of optical communication through a plurality of wavelengths, said apparatus comprising:
an optical transmitter capable of selectively allocating one or more wavelengths and transmitting the optical signal(s) with the allocated wavelength; and an optical receiver capable of receiving the optical signal over the network;
wherein the optical receiver includes a plurality of optical detectors, each capable of detecting the optical signal and transforming it to electric signal and then outputting the electric signal; a plurality of optical filters, each positioned on the optical path along which the optical signal enters, the optical filter capable of picking up an allocated wavelength from the other and then outputting optical signal with the picked up wavelength; a filter controller capable of allocating the individual wavelength to the corresponding optical filter; and a received signal processor capable of transferring the output electric signal(s) to received data regarding the signal from the other nodes and blocking the output electric signal without transferring to the received data regarding the signal from its own node, if necessary; and
wherein said received signal processor transfers the electric signals obtained from the optical signals that have a first wavelength and emanate from all the other nodes, as well as those obtained from the optical signals that have one or more second wavelengths and emanate from all the node(s) composing an optical communication group, except for its own node.

2. The optical communication apparatus as claimed in claim 1, wherein each second wavelength differs from node to node.

3. The optical communication apparatus as claimed in claim 1 or claim 2, wherein each optical filter consists of a reflection filter capable of being selectively allocated with a reflection wavelength as the picked up wavelength.

4. The optical communication apparatus as claimed in any preceding claim, wherein the number of optical filters is two.

5. An optical LAN system comprising: a plurality of nodes, each consisting of the optical communication apparatus of claim 1; and an optical multiplexing- branching means connected with each node through a pair of optical transmission mediums for transmission and reception respectively and consisting of a passive device which is capable of multiplexing all optical signals emanating from the respective nodes over the medium for transmission and branching the multiplexed signal into the respective nodes over the medium for receiving.

6. The optical LAN system as claimed in claim 5, wherein a router is connected as one of the nodes to the optical multiplexing- branching means; said router allows the communication with the other network.
